# EUROPÄISCHE PATENTSCHRIFT

(11) **EP 2 671 297 B1**
(45) Veröffentlichungstag und Bekanntmachung des Hinweises auf die Patenterteilung: **02.05.2018**
(21) Anmeldenummer: 11704202.8
(22) Anmeldetag: 01.02.2011
(51) Int. Cl.: H02H 7/125, H02J 3/36, H02M 7/797, H02M 1/32

(54) **VERFAHREN ZUM BESEITIGEN EINES FEHLERS AN EINER HOCHSPANNUNGS-GLEICHSTROMLEITUNG, ANLAGE ZUM ÜBERTRAGEN EINES ELEKTRISCHEN STROMES ÜBER EINE HOCHSPANNUNGS-GLEICHSTROMLEITUNG UND UMRICHTER**
METHOD FOR CLEARING A FAULT ON A HVDC LINE, ARRANGEMENT FOR TRANSMISSION OF ELECTRICAL CURRENT OVER A HVDC LINE AND CONVERTER
MÉTHODE POUR ÉLIMINER UN DÉFAUT SUR UNE LIGNE HAUTE TENSION À COURANT CONTINU, DISPOSITIF POUR LA TRANSMISSION D'UN COURANT ÉLECTRIQUE SUR UNE LIGNE HAUTE TENSION À COURANT CONTINU ET CONVERTISSEUR

(43) Veröffentlichungstag der Anmeldung: 11.12.2013
(73) Patentinhaber: Siemens Aktiengesellschaft, 80333 München (DE)
(72) Erfinder: DAVIES, Mark, Howrah TAS 7018 (AU); GAMBACH, Herbert, 91080 Uttenreuth (DE)
(86) Internationale Anmeldenummer: PCT/EP2011/051400
(87) Internationale Veröffentlichungsnummer: WO 2012/103936

(56) Entgegenhaltungen:
- EP-A1- 0 867 998
- WO-A1-2010/025758
- WO-A1-2010/149200
- WO-A1-2011/012174
- WO-A1-2011/042050
- MERLIN M M C ET AL: "A New Hybrid Multi-Level Voltage-Sourced Converter with DC Fault Blocking Capability", 9TH INSTITUTION OF ENGINEERING AND TECHNOLOGY INTERNATIONAL CONFERENCE ON AC AND DC POWER TRANSMISSION,, 19. Oktober 2010 (2010-10-19), Seiten 1-5, XP007917933,
- SUH B-S ET AL: "A NEW MULTILEVEL INVERTER TOPOLOGY WITH A HYBRID APPROACH", 8TH EUROPEAN CONFERENCE ON POWER ELECTRONICS AND APPLICATIONS. LAUSANNE, CH, SEPT. 7 - 9, 1999; [EPE . EUROPEAN CONFERENCE ON POWER ELECTRONICS AND APPLICATIONS], EPE ASSOCIATION, BRUSSELS, BE, vol. CONF. 8, 7 September 1999 (1999-09-07), pages 1-09, XP000890258, ISBN: 978-90-75815-04-7

## Beschreibung

Verfahren zum Beseitigen eines Fehlers an einer Hochspannungs-Gleichstromleitung, Anlage zum Übertragen eines elektrischen Stromes über eine Hochspannungs-Gleichstromleitung. Die Erfindung betrifft ein Verfahren zum Beseitigen eines Fehlers an einer Hochspannungs-Gleichstromleitung, an die über einen selbstgeführten Umrichter ein Wechselstromnetz angeschlossen ist.

Ein solches Verfahren ist aus der Übersetzung DE 698 37 414 T2 2007.12.20 der europäischen Patentschrift EP 0 867 998 B1 bekannt. Dieser Druckschrift lässt sich nämlich ein Verfahren für die Hochspannungsgleichstromübertragung über eine elektrische Anlage mit einem Gleichspannungsnetz mit zwei Leitungen und daran über Umrichter angeschlossenen Wechselspannungsnetzen entnehmen. Bei dem bekannten Verfahren wird zur schnellen Begrenzung eines Stromes im Falle eines Fehlers, beispielsweise bei einem Fehler mit Erdschluss in dem Gleichspannungsnetz, in eine der Leitungen eine Parallelschaltung mindestens eines Absperrhalbleiterbauteils und eines Überspannungsableiters verwendet. Im Normalbetrieb wird das Absperrhalbleiterbauteil durchlässig gehalten, während es bei einem gleichspannungsnetzseitigen Fehler von einer Steuervorrichtung mit hoher Frequenz abwechselnd gesperrt und geöffnet wird, wodurch eine Strombegrenzung und gegebenenfalls auch eine Stromunterbrechung eintritt.

Ferner ist aus der WO 2010/025758 A1 ein Verfahren zum Beseitigen eines Fehlers an einer Hochspannungs-Gleichstromleitung bekannt, wobei ein selbstgeführter Umrichter an die Hochspannungs-Gleichstromleitung angeschlossen ist. Der Umrichter ist dabei ein modularer Merhstufenumrichter, der eine Mehrzahl von Halbbrücken-Submodulen umfasst. Zur Fehlerbeseitigung ist eine im Gleichspannungskreis angeordnete Kurzschlussschutzeinrichtung vorgesehen, die mehrere in Reihe geschaltete ansteuerbare Leistungshalbleiter aufweist. Mittels der Schutzeinrichtung kann der Kurzschlussstrom im Gleichspannungskreis im Fehlerfall begrenzt werden.

Ein weiteres Verfahren zum Beseitigen eines Fehlers an einer Hochspannungs-Gleichstromleitung ist in der Veröffentlichung von Merlin M.M.C. et al "A New Hybrid Multi-Level Voltage-Sourced Converter with DC Blocking Capability" (9th Institution of Engineering and Technology International Conference on AC and DC Power Transmission 2010) offenbart, bei dem der Umrichter mehrere H-Brücken-Submodule in jedem Phasenzweig aufweist, wobei im Fehlerfall die H-Brücken-Submodule so angesteuert werden, dass eine Gegenspannung zu der Spannung an der Wechselspannungsseite des Umrichters erzeugt wird, wodurch der Kurzschlussstrom beseitigt wird.

Aus dem Aufsatz "A New Multilevel Inverter Topology with a Hybrid Approach" von Bum-Seok Suh et al, 8th European Conference on Power Electronics and Applications, Lausanne, 1999, ist ein Multilevel-Wechselrichter bekannt, mit dem eine gerade Anzahl von Spannungsleveln erzeugt werden kann. Um die gerade Anzahl von Spannungsleveln zu erzeugen, weist ein Zweig des Wechselrichters neben einem Vollbrückenmodul zusätzlich ein Halbbrückenmodul auf.

Die internationale Patentanmeldung WO 2010/149200 A1 offenbart einen Voltage Source Converter, der in jeder Phase eine Reihenschaltung aus einer Mehrzahl von Vollbrückenmodulen und einem Schalter aufweist. Mittels der Vollbrückenmodule kann bei einem gleichstromseitigen Kurzschluss eine Spannung erzeugt werden, die entgegengesetzt zur treibenden Spannung des fehlerfreien elektrischen Netzes gerichtet ist.

Die ältere internationale Patentanmeldung WO 2011/042050 A1 offenbart einen Voltage Source Converter, der in jedem Phasenzweig eine erste Gruppe an Zellen und eine zweite Gruppe an Zellen aufweist. Die Zellen der ersten Gruppe können nur eine unipolare Spannung bereitstellen, während die Zellen der zweiten Gruppe eine bipolare Spannung bereitstellen können. Der Converter weist mehr Zellen der ersten Gruppe als Zellen der zweiten Gruppe auf.

Der Erfindung liegt die Aufgabe zugrunde, ein Verfahren zum Beseitigen eines Fehlers an einer Hochspannungs-Gleichstromleitung vorzuschlagen, dass zuverlässig mit vergleichsweise geringem Aufwand durchführbar ist. Diese Aufgabe wird durch ein Verfahren gemäss Anspruch 1 gelöst. Zur Lösung dieser Aufgabe wird bei dem eingangs angegebenen Verfahren erfindungsgemäß bei einem Fehler an der Hochspannungs-Gleichstromleitung zur Löschung eines Lichtbogens an der Hochspannungs-Gleichstromleitung mittels Ansteuerung jeweils mindestens eines H-Brücken-Submoduls in Phasenzweigen des in Modulbauweise mit mehreren Halbbrücken-Submodulen ausgeführten Umrichters unter Erzeugung einer Gegenspannung zur Spannung am Lichtbogen der bei dem Fehler fließende Kurzschlussstrom verringert. H-Brücken-Submodule sind beispielsweise aus dem Aufsatz "New Concept for High Voltage-Modular Multilevel Converter", PESC 2004 Conference in Aachen, Germany" bekannt.

Die Ansteuerung des jeweils mindestens einen H-Brücken-Submoduls erfolgt unmittelbar nach dem kurzschlussbedingten Öffnen von Schaltern, die in dem Wechselspannungsnetz auf der von der Hochspannungs-Gleichstromleitung abgewandten Seite des Umrichters angeordnet sind.

Bei dem erfindungsgemäßen Verfahren bedarf es im Fehlerfalle in vorteilhafter Weise keiner zusätzlichen Schaltungselemente an bzw. in der Hochspannungs-Gleichstromleitung, um den Strom zu unterbrechen. Diese Schaltungselemente führen nämlich im fehlerfreien Betrieb zu zusätzlichen Verlusten. Bei dem erfindungsgemäßen Verfahren ist es dagegen nur erforderlich, einen selbstgeführten Umrichter in Modulbauweise mit mindestens einem H-Brücken-Submodul zu verwenden und im Fehlerfalle nach Öffnen der Schalter im Wechselspannungsnetz so anzusteuern, dass eine Gegenspannung zur Spannung am Lichtbogen erzeugt wird; dadurch wird der aus den Induktivitäten des selbstgeführten Umrichters in Modulbauweise und aus den Induktivitäten, die auf der Gleichspannungsseite zwischen den Gleichspannungsanschlüssen des Umrichters und der Fehlerstelle wirksam sind, fließende Strom über die Fehlerstelle erheblich schneller verringert, als dies ohne die erfindungsgemäße Ausgestaltung der Fall wäre. Dabei richtet sich die Anzahl der H-Brücken-Submodule nach der Höhe der jeweils zu erzeugenden Gegenspannung. Die übrigen Submodule des Umrichters können Halbbrücken-Submodule sein, was sich vorteilhaft auf die Herstellungskosten des gesamten Umrichters auswirkt. Außerdem sind dadurch die Verluste im Umrichter klein gehalten. Halbbrücken-Submodule sind beispielsweise auch aus dem Aufsatz "New Concept for High Voltage-Modular Multilevel Converter", PESC 2004 Conference in Aachen, Germany" bekannt.

Bei dem erfindungsgemäßen Verfahren wird vorteilhafter Weise ein Umrichter verwendet, bei dem die Anzahl der H-Brücken-Submodule im Vergleich zur Anzahl Halbbrücken-Submodule klein ist. Es werden also zur Herstellungskosten- und zur Verlustreduzierung Umrichter verwendet, die jeweils möglichst wenige H-Brücken-Submodule und möglichst viele Halbbrücken-Submodule aufweisen.

Bei dem erfindungsgemäßen Verfahren kann der Umrichter je nach Energieflussrichtung als Gleichrichter oder als Wechselrichter betrieben werden.

Die Erfindung betrifft ferner eine Anlage zum Übertragen eines elektrischen Stromes über eine Hochspannungs-Gleichstromleitung, an die über einen selbstgeführten Umrichter ein Wechselstromnetz angeschlossen ist.

Ausgehend von einer solchen Anlage gemäß dem eingangs angegebenen Stand der Technik, liegt der Erfindung auch die Aufgabe zugrunde, diese Anlage so fortzuentwickeln, dass sie mit vergleichsweise geringem Aufwand bei geringen Verlusten in der Lage ist, Fehler im Gleichspannungsnetz zu beseitigen. Diese Aufgabe wird durch eine Anlage gemäss Anspruch 4 gelöst. Zur Lösung dieser Aufgabe ist erfindungsgemäß der Umrichter in Modulbauweise ausgeführt ist und weist in seinen Phasenzweigen jeweils mindestens ein H-Brücken-Submodul in einer Reihenschaltung mit mehreren Halbbrücken-Submodulen auf. Mittels eines solchen Umrichters ist die erfindungsgemäße Anlage nach einem kurzschlussbedingten Öffnen von Schaltern im Wechselspannungsnetz in der Lage, bei einer derartigen Ansteuerung seines mindestens einen H-Brücken-Submoduls, dass eine Gegenspannung zur Spannung am Lichtbogen in einem Fehlerfalle erzeugt wird, den Kurzschlussstrom relativ schnell soweit zu verringern, dass der Fehler beseitigt ist; dabei werden im normalen Betrieb der Anlage bei fehlerfreier Hochspannungs-Gleichstromleitung Verluste vergleichsweise gering gehalten, weil die erfindungsgemäße Anlage ohne zusätzliche Absperrelemente und Überspannungsableiter im Gleichspannungsnetz auskommt, indem der Umrichter selbst bzw. seine H-Brücken-Submodule entsprechend gesteuert werden.

Bei der erfindungsgemäßen Anlage ist - um die Herstellungskosten und die elektrischen Verluste gering zu halten - in der Reihenschaltung die Anzahl H-Brücken-Submodule im Vergleich zur Anzahl der Halbbrücken-Submodule klein.

In der erfindungsgemäßen Anlage kann der Umrichter sowohl als Gleichrichter als auch als Wechselrichter eingesetzt werden.

Zur weiteren Erläuterung der Erfindung ist in
Fig. 1 ein Ausführungsbeispiel einer Anlage zum Durchführen des erfindungsgemäßen Verfahrens mit wechselspannungsseitig betätigbaren Schaltern und in
Fig. 2 ein Ausführungsbeispiel des erfindungsgemäßen Umrichters dargestellt.

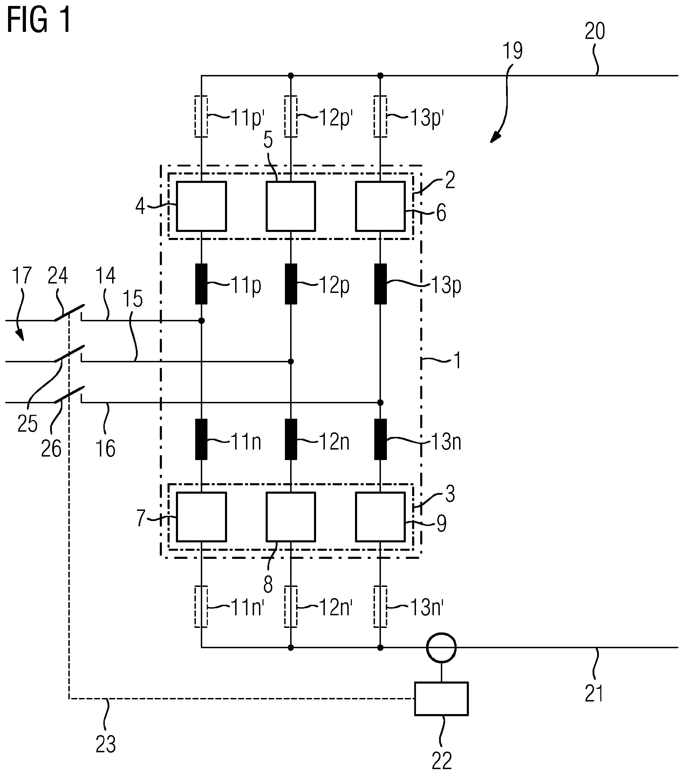

Die in Fig. 1 gezeigte Anlage weist einen nur schematisch dargestellten selbstgeführten Umrichter 1 auf, der in bekannte Weise aus einem hier nur nach Art eines Blockschaltbildes dargestellten positivseitigen Converterteil 2 und einem negativseitigen Converterteil 3 mit Phasenzweigen 4,5 und 6 bzw. 7,8 und 9 besteht. Der Umrichter 1 ist in üblicherweise über Spulen 11p, 12p und 13p bzw. 11n, 12n und 13n mit den drei Phasenleitern 14, 15 und 16 eines Wechselspannungsnetzes 17 verbunden. Die Spulen können aber auch auf der Gleichspannungsseite des Umrichters 1 angeordnet sein, wie es in Figur 1 strichliert unter Benutzung von Bezugszeichen 11p' bis 13n' angedeutet ist.

Auf der vom Wechselspannungsnetz 17 abgewandeten Seite des Umrichters 2 ist beidseitig eine Hochspannungs-Gleichstromleitung 19 mit ihren beiden Leitungen 20 und 21 angeschlossen ist. In der Leitung 21 ist eine Anordnung 22 zum Erfassen eines bei einem Fehler an der Hochspannungs-Gleichstromleitung 19 fließenden Kurzschlussstromes geschaltet, von der über eine strichliert dargestellte elektrische Verbindung 23 im Fehlerfalle eine Betätigung von Schaltern 24, 25 und 26 in den Phasenleitern 14, 15 und 16 bewirkt wird. Die geöffneten Schalter 24 bis 26 unterbrechen die Verbindung zwischen dem Wechselspannungsnetz 17 und der Hochspannungs-Gleichstromleitung 19.

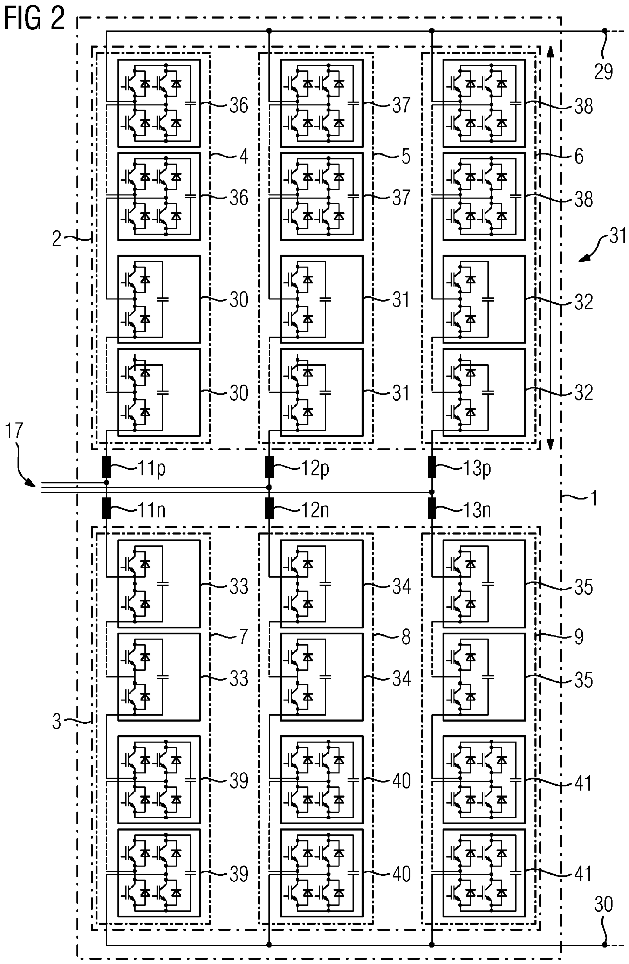

In Fig. 2 ist der selbstgeführte Umrichter 1 gemäß Fig. 1 im Detail mit seinem positivseitigen Converterteil 2 und seinen negativseitigen Converterteil 3 dargestellt; jedes dieser Converterteile 2 und 3 besteht aus den drei positivseitigen Phasenzweigen 4, 5 und 6 und aus den drei negativseitigen Phasenzweigen 7,8 und 9. Jeder Phasenzweig 4 bis 9 seinerseits besteht positivseitig und negativseitig aus jeweils N Submodulen, wobei der positivseitige Phasenzweig 4 bis 6 jeweils eine Anzahl k von Halbbrücken-Submodulen 30, 31 und 32 aufweist und der negativseitige Phasenzweig 7 bis 9 ebenfalls eine Anzahl k von Halbbrücken-Submodulen 33, 34 und 35 besitzt. In jedem Phasenmodul 4 bis 6 sowie 7 bis 9 liegen in Reihe mit den k Halbbrücken-Submodulen 30 bis 32 beziehungsweise 33 bis 35 N-k H-Brücken-Submodule 36, 37 und 38 beziehungsweise 39, 40 und 41.

Tritt ein Fehler an der Hochspannungs-Gleichstromleitung 19 auf, dann wird der damit einhergehende Kurzschlussstrom von der Anordnung 22 erfasst, und es werden die Schalter 24 bis 26 geöffnet, wodurch das Wechselspannungsnetz 17 von der Hochspannungs-Gleichstromleitung 19 abgetrennt wird. Aufgrund der in den Spulen 11p bis 13p sowie 11n bis 13n sowie in den gleichspannungsseitig wirksamen Induktivitäten (zum Beispiel der Induktivität eines gleichspannungsseitig angeschlossenen Kabels als Gleichstromleitung bis zur Fehlerstelle oder einer gleichspannungsseitig angeschlossenen Freileitung bis zur Fehlerquelle) gespeicherten elektrischen Energie fließt jedoch weiterhin ein Kurzschlussstrom zu der Fehlerstelle an der Hochspannungs-Gleichstromleitung 19. Um diesen Strom schnell zu verringern und damit den Fehler an der Hochspannungs-Gleichstromleitung 19 zu beseitigen, werden von einer der besseren Übersichtlichkeit halber in den Figuren nicht dargestellten Steueranordnung die H-Brücken-Submodule 36 bis 40 so angesteuert, dass eine Gegenspannung zu der Spannung an der Fehlerstelle bzw. am Lichtbogen entsteht; diese Gegenspannung verringert schnell den Kurzschlussstrom unter Beseitigung des Fehlers an der Hochspannungs-Gleichstromleitung 19. Dabei ist die Anzahl N-k der H-Brücken-Submodule 36 bis 41 so groß gewählt, dass eine ausreichend hohe Gegenspannung erzeugbar und damit eine schnelle Verringerung des Kurzschlussstromes mit einhergehender Fehlerbeseitigung möglich ist. Darüber hinaus bewirken die H-Brücken-Submodule bei geeigneter Ansteuerung auch eine Verminderung der Größe des Kurzschlussstroms.

Dabei kann die Anzahl N-k der H-Brücken-Submodule in günstiger Weise relativ klein gehalten werden, was sich vorteilhaft auf die Bauelemente-Kosten des selbstgeführten Umrichters 1 auswirkt; die Anzahl k der wenig aufwendigen Halbbrücken-Brücken-Submodule 30 bis 35 ist dann relativ groß.

## Patentansprüche

1. Verfahren zum Beseitigen eines Fehlers an einer Hochspannungs-Gleichstromleitung (19), an die über einen selbstgeführten Umrichter (1) ein Wechselstromnetz (17) angeschlossen ist,
**dadurch gekennzeichnet, dass**
bei einem Fehler an der Hochspannungs-Gleichstromleitung (19) zur Löschung eines Lichtbogens an der Hochspannungs-Gleichstromleitung (19) unmittelbar nach einem kurzschlussbedingten Öffnen von Schaltern, die in dem Netz (17) auf der von der Hochspannungs-Gleichstromleitung abgewandten Seite des Umrichters angeordnet sind,
• mittels Ansteuerung jeweils mindestens eines H-Brücken-Submoduls (36,37,38;39,40,41) in Phasenzweigen (4,5,6;7,8,9) des in Modulbauweise mit mehreren Halbbrücken-Submodulen (30,31,31;33,34,35) in einer Reihenschaltung mit dem mindestens einen H-Brücken-Submodul ausgeführten Umrichters (1) unter Erzeugung einer Gegenspannung zur Spannung am Lichtbogen der bei dem Fehler fließende Kurzschlussstrom verringert wird, wobei
• bei dem Umrichter (1) die Anzahl der H-Brücken-Submodule (36,37,38;39,40,41) im Vergleich zur Anzahl der Halbbrücken-Submodule (30,31,31;33,34,35) klein ist.

2. Verfahren nach Anspruch 1,
**dadurch gekennzeichnet, dass**
• der Umrichter als Gleichrichter betrieben wird.

3. Verfahren nach Anspruch 1,
**dadurch gekennzeichnet, dass**
• der Umrichter als Wechselrichter betrieben wird.

4. Anlage zum Übertragen eines elektrischen Stromes über eine Hochspannungs-Gleichstromleitung (19), an die über einen selbstgeführten Umrichter (1) ein Wechselstromnetz (17) angeschlossen ist,
**dadurch gekennzeichnet, dass**
• der Umrichter (1) in Modulbauweise ausgeführt ist und in seinen Phasenzweigen (4,5,6;7,8,9) jeweils mindestens ein H-Brücken-Submodul (36,37,38;39,40,41) in einer Reihenschaltung mit mehreren Halbbrücken-Submodulen (30,31,32;33,34,35) aufweist,
• in der Reihenschaltung die Anzahl der H-Brücken-Submodule (36,37,38;39,40,41) im Vergleich zur Anzahl der Halbbrücken-Submodule (30,31,32;33,34,35) klein ist,
• der Umrichter (1) ein negativseitiges Converterteil (3) aufweist, das mit einer Leitung (21) der Hochspannungs-Gleichstromleitung (19) verbunden ist, und
• in der Leitung (21) eine Anordnung (22) zum Erfassen eines bei einem Fehler an der Hochspannungs-Gleichstromleitung (19) fließenden Kurzschlussstromes geschaltet ist.

5. Anlage nach Anspruch 4,
**dadurch gekennzeichnet, dass**
• der Umrichter als Gleichrichter eingesetzt ist.

6. Anlage nach Anspruch 4,
**dadurch gekennzeichnet, dass**
• der Umrichter als Wechselrichter eingesetzt ist.

## Claims

1. Method for eliminating a fault on a high-voltage direct-current line (19) to which an AC power supply system (17) is connected via a self-commutated converter (1),
**characterized in that**,
in the event of a fault on the high-voltage direct-current line (19), in order to extinguish an arc on the high-voltage direct-current line (19) directly after switches which are arranged in the supply system (17) on that side of the converter which is remote from the high-voltage direct-current line are opened because of the short circuit,
• the short-circuit current which flows in the event of the fault is reduced by operating in each case at least one H-bridge submodule (36, 37, 38; 39, 40, 41) in phase branches (4, 5, 6; 7, 8, 9) of the converter (1), which is of modular design and has a plurality of half-bridge submodules (30, 31, 32; 33, 34, 35) in a series circuit with the at least one H-bridge submodule, so as to produce a countervoltage to the voltage across the arc, wherein
• the number of H-bridge submodules (36, 37, 38; 39, 40, 41) in the converter (1) is smaller than the number of half-bridge submodules (30, 31, 32; 33, 34, 35).

2. Method according to Claim 1,
**characterized in that**
• the converter is operated as a rectifier.

3. Method according to Claim 1,
**characterized in that**
• the converter is operated as an inverter.

4. System for transmitting an electric current via a high-voltage direct-current line (19) to which an AC power supply system (17) is connected via a self-commutated converter (1), **characterized in that**
• the converter (1) is of modular design and has, in the phase branches (4, 5, 6; 7, 8, 9) thereof, in each case at least one H-bridge submodule (36, 37, 38; 39, 40, 41) in a series circuit with a plurality of half-bridge submodules (30, 31, 32; 33, 34, 35),
• the number of H-bridge submodules (36, 37, 38; 39, 40, 41) in the series circuit is smaller than the number of half-bridge submodules (30, 31, 32; 33, 34, 35),
• the converter (1) has a negative-side converter part (3) which is connected to a line (21) of the high-voltage direct-current line (19), and
• an arrangement (22) for detecting a short-circuit current flowing in the event of a fault on the high-voltage direct-current line (19) is connected in the line (21).

5. System according to Claim 4,
**characterized in that**
• the converter is used as a rectifier.

6. System according to Claim 4,
**characterized in that**
• the converter is used as an inverter.

## Revendications

1. Procédé d'élimination d'un défaut sur une ligne (19) en haute tension en courant continu, à laquelle un réseau (17) en courant alternatif est raccordé par un convertisseur (1) à commutation automatique,
**caractérisé en ce que**
s'il se produit un défaut sur la ligne (19) en haute tension à courant continu, pour éteindre un arc électrique sur la ligne (19) en haute tension à courant continu immédiatement après une ouverture, due à un court-circuit, d'interrupteurs, qui sont montés dans le réseau du côté de le convertisseur éloigné de la ligne en haute tension en courant continu,
• on diminue, au moyen d'une excitation de respectivement au moins un sous-module (36, 37, 38; 39, 40, 41) à pont en H, dans des branches (4, 5, 6; 7, 8, 9) de phase du convertisseur (1) réalisées en ayant plusieurs sous-modules (30, 31, 31; 33, 34, 35) en demi-pont en un circuit série avec le au moins un sous-module en pont en H, avec production d'une contre tension à la tension d'arc électrique, le courant de court-circuit passant en cas de défaut, dans lequel
• dans le convertisseur (1), le nombre des sous-modules (36, 37, 38; 39, 40, 41) à pont en H est petit par rapport au nombre des sous-modules (30, 31, 31; 33, 34, 35) en demi-pont.

2. Procédé suivant la revendication 1,
**caractérisé en ce que**
• l'on fait fonctionner le convertisseur en redresseur.

3. Procédé suivant la revendication 1,
**caractérisé en ce que**
• l'on fait fonctionner le convertisseur en onduleur.

4. Système de transmission d'un courant électrique, par l'intermédiaire d'une ligne (19) en haute tension à courant continu, à laquelle un réseau (17) en courant alternatif est raccordé par un convertisseur (1) à commutation automatique, **caractérisé en ce que**
• le convertisseur (1) est réalisé en mode de construction modulaire et a, dans ses branches (4, 5, 6; 7, 8, 9) de phase, respectivement au moins un sous-module (36, 37, 38; 39, 40, 41) à pont en H, dans un circuit série avec plusieurs sous-modules (30, 31, 32; 33, 34, 35) en demi-pont,
• dans le circuit série, le nombre des sous-modules (36, 37, 38; 39, 40, 41) à pont en H est petit par rapport au nombre des sous-modules (30, 31, 32; 33, 34, 35) en demi-pont,
• le convertisseur (1) a une partie (3), le convertisseur du côté négatif, qui est reliée à une ligne (21) de la ligne (19) en haute tension à courant continu et
• dans la ligne (21) est monté un agencement (22) de détection d'un courant de court-circuit passant, en cas de défaut, sur la ligne (19) en haute tension à courant continu.

5. Système suivant la revendication 4,
**caractérisé en ce que**
• le convertisseur est utilisé comme redresseur.

6. Système suivant la revendication 4,
**caractérisé en ce que**
• le convertisseur est utilisé comme onduleur.
